# EUROPEAN PATENT SPECIFICATION

(11) **EP 3 315 056 B1**
(45) Date of publication and mention of the grant of the patent: **03.03.2021**
(21) Application number: 16196091.9
(22) Date of filing: 27.10.2016
(51) Int. Cl.: A47J 37/07

(54) **COLLAPSIBLE BARBECUE**
ZUSAMMENKLAPPBARER GRILL
APPAREIL DE GRILLADE PLIABLE

(43) Date of publication of application: 02.05.2018
(73) Proprietor: Industro International Co., Ltd., Taichung City 407 (TW)
(72) Inventor: Huang, Kuo-Chan, 407 Taichung City (TW)
(74) Representative: Lang, Christian

(56) References cited:
- WO-A1-2015/013287
- US-A- 4 455 992
- US-A- 4 489 706
- US-A1- 2014 326 231
- US-A1- 2015 289 715
- US-B1- 6 189 529

## Description

### BACKGROUND OF INVENTION

### 1. FIELD OF INVENTION

The present invention relates to stoking and, more particularly, to a collapsible stoking apparatus.

### 2. RELATED PRIOR ART

A typical non-collapsible stoking apparatus includes a tubular body made by bending a piece of metal. In use, charcoal or wood is put in the stoking apparatus before the charcoal or wood is set on fire. The stoking apparatus is used to shield flames from strong wind that could otherwise blows out the flames. However, such non-collapsible stoking apparatus is quite bulky when it is not in use.

US 5,682,872 A discloses a camping furnace including two or three separable sections 24 that can be connected to one another by hinge pins 19. The separable sections 24 are arched metal strips that cannot be overlapped without first removing all of the hinge pins 19 from them. Such a process is troublesome.

US 8,028,689 B2 discloses a charcoal starter 10 including six panels 20, 22, 24, 26, 28 and 30 that are pivotally connected to one another by hinges. The panels 20 and 26 are large panels while the panels 22, 24, 28 and 30 are small panels. The charcoal starter 10 can be expanded to provide a square profile. The panel 22 can be pivoted to the panel 24, and the panel 28 to the panel 30, to bring the panel 20 toward the panel 26. Thus, the charcoal starter 10 is collapsed. Such collapsing of the charcoal starter 10 is convenient. The manufacturing of the charcoal starter 10 is complicated because the charcoal starter 10 includes quite a few components.

US 8,028,689 B2 further discloses a charcoal starter 110 including four panels 120, 122, 124 and 126. The panels 120 and 126 are large panels while the panels 122 and 124 are small panels. The panel 120 is pivotally connected to the panel 126 by a large hinge 140. The panel 120 is pivotally connected to the panel 122 by a small hinge. The panel 122 is pivotally connected to the panel 124 by another small hinge. The panel 124 is pivotally connected to the panel 126 by another small hinge. The charcoal starter 110 can be expanded to provide a triangular profile. The panel 122 can be pivoted to the panel 124 to bring the panel 120 toward the panel 126. Thus, the charcoal starter 110 is collapsed. Such collapsing of the charcoal starter 10 is convenient. The manufacturing of the charcoal starter 10 is complicated because the charcoal starter 10 is provided with hinges of different sizes.

WO 2015/013287 A1 and US 2014/0326231 A1 describe collapsible combustion containers comprising four hingedly connected side panels, whereat one side panel possesses a relief space feature allowing for two side panels being folded and arranged between the two remaining side panels when the container is in its collapsed position. From US 4 455 992 A a folding roaster is known that comprises six hingedly connected side panels.

The present invention is therefore intended to obviate or at least alleviate the problems encountered in prior art.

### SUMMARY OF INVENTION

It is an objective of the present invention to provide a convenient and simple collapsible stoking apparatus.

To achieve the foregoing objective, the stoking apparatus includes a first concealable panel, a second concealable panel, a bent covering panel and a flat covering panel. The second concealable panel includes an edge pivotally connected to an edge of the first concealable panel. The bent covering panel includes a major portion and a minor portion. The major portion is made with an area marginally larger than that of the concealable panels and an edge pivotally connected to another edge of the first concealable panel. The minor portion extends from an opposite edge of the major portion, with an angle between the major and minor portions. The flat covering panel is made with an area substantially identical to that of the major portion, an edge pivotally connected to an edge of the minor portion, and another edge pivotally connected to another edge of the second concealable panel. There is an angle between the first and second concealable panels when the collapsible stoking apparatus is in an extended position. The angle between the first and second concealable panels is substantially identical to the angle between the major and minor portions. The angle between the first and second concealable panels and the angle between the major and minor portions are located at two ends of a diagonal line. The minor portion provides a gap between the major portion and the flat covering panel to receive the first and second concealable panels when the collapsible stoking apparatus is in a collapsed position.

In another aspect, the collapsible stoking apparatus further includes a grill supported on the panels when the stoking apparatus is in the extended position.

In another aspect, at least one of the panels further includes at least one sledge for supporting a portion of the grill while at least another one of the panels comprises at least one clip for supporting another portion of the grill.

In another aspect, each of the first and second concealable panels is a trapezoidal plate, and the flat covering panel is a trapezoidal plate, and the major portion panel is a trapezoidal portion.

In another aspect, one of the panels includes at least one aperture or slot.

In another aspect, the major portion includes two loops adapted for receiving two ends of a handle.

Other objectives, advantages and features of the present invention will be apparent from the following description referring to the attached drawings.

### BRIEF DESCRIPTION OF DRAWINGS

The present invention will be described via detailed illustration of the preferred embodiment referring to the drawings wherein:
FIG. 1 is an exploded view of a collapsible stoking apparatus according to the preferred embodiment of the present invention;
FIG. 2 is a front view of the collapsible stoking apparatus shown in FIG. 1;
FIG. 3 is a perspective view of the collapsible stoking apparatus in another position than shown in FIG. 2;
FIG. 4 is a perspective view of a grill supported on the collapsible stoking apparatus shown in FIG. 3;
FIG. 5 is a top view of the grill supported and the collapsible stoking apparatus shown in FIG. 4; and
FIG. 6 is a top view of the collapsible stoking apparatus in another collapsed position than shown in FIG. 3.

### DETAILED DESCRIPTION OF PREFERRED EMBODIMENT

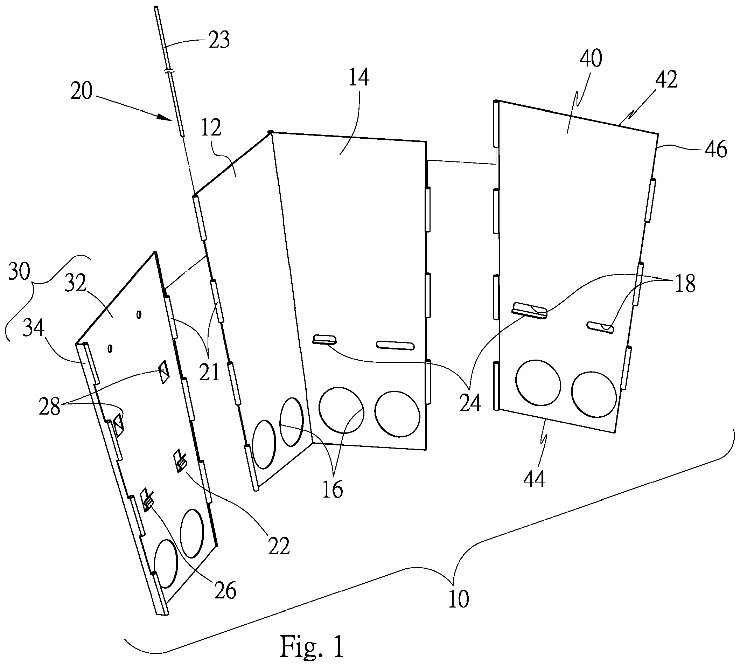

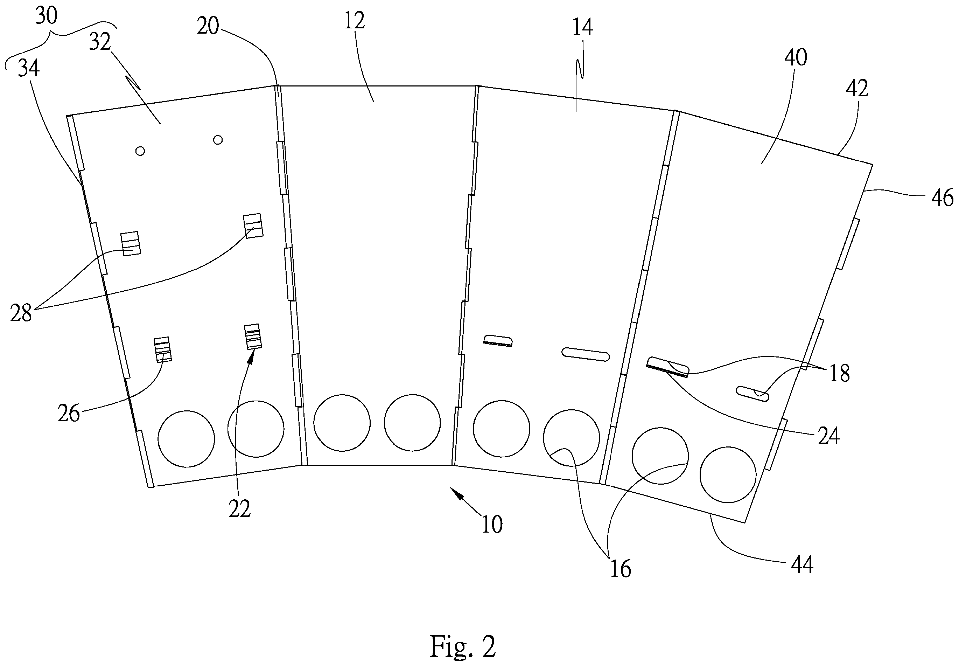

Referring to FIGS. 1 and 2, a stoking apparatus 10 includes four panels 12, 14, 30 and 40 and several hinges 20 according to the preferred embodiment of the present invention. Each of the hinges 20 includes two rows of sleeves 21 and a pin 23. Each of the sleeves 21 is located at a corresponding one of two opposite edges of each of the panels 12, 14, 30 and 40. Each of the pins 23 is inserted two alternate ones of the rows of sleeves 21. The hinges 20 allow a certain degree of pivoting of the panels 12, 14, 30 and 40 relative to one another. The sleeves 21 are made of a same diameter. Thus, the hinges 20 are made of a same size.

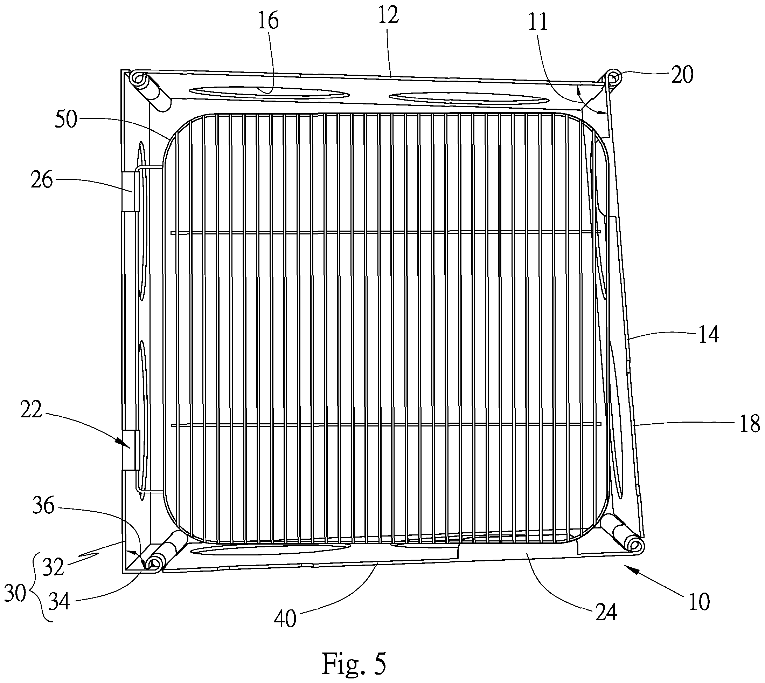

The panel 30 includes a major portion 32 and a minor portion 34, with an angle 36 between the major portion 32 and the minor portion 34 (FIG. 5). The major portion 32 of the panel 30 is made of a same area as the panels 12 and 14. The major portion 32 includes an edge pivotally connected to an edge of the panel 12 by one of the hinges 20. Thus, the minor portion 34 of the panel 30 and the panel 12 are on different sides of the major portion 32 of the panel 30.

An edge of the panel 40 is connected to an edge of the panel 14 by one of the hinges 20. Another edge of the panel 40 is connected to the minor portion 34 of the panel 30 by another one of the hinges 20. Thus, the sum of the area of the panel 40 and the area of the minor portion 34 of the panel 30 is identical to the area of each of the panels 12 and 14.

Each of the panels 12, 14, 30 and 40 is a trapezoidal metal plate. For example, the panel 40 includes an upper edge 42, a lower edge 44 and two lateral edges 46. The upper edge 42 extends parallel to the lower edge 44. The upper edge 42 extends longer than the lower edge 44. Each of the lateral edges 46 interconnects the upper edge 42 and the lower edge 44. Thus, the stoking apparatus 10 can spread like a fan.

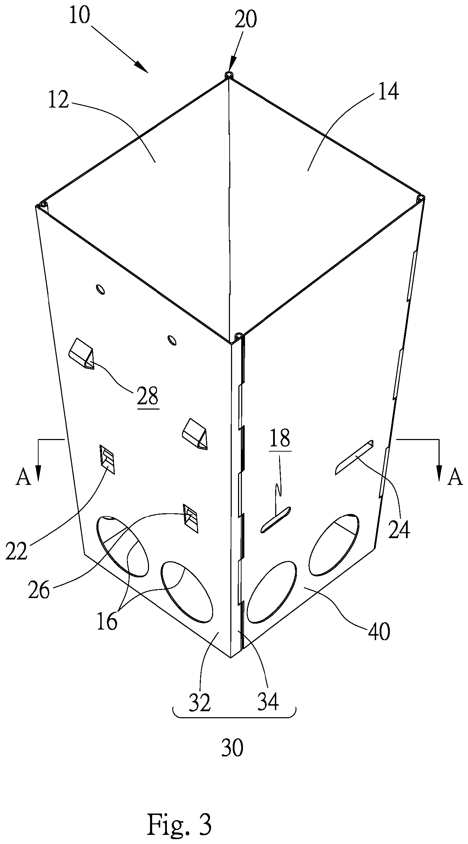

Each of the panels 12, 14, 30 and 40 includes two apertures 16 near the lower edge 44. The panel 14 further includes two slots 18 and a ledge 24 extending below one of the slots 18. The ledge 24 is in the form of a horizontal fin. The panel 30 further includes two clips 26 extending from an internal side of the major portion 32 and two loops 28 extending from an external side of the major portion 32 (FIG. 3). The loops 28 are adapted for receiving two ends of a handle (not shown). The panel 40 further includes two slots 18 and a ledge 24 extending below one of the slots 18. In another embodiment, each of the ledges 24 can be replaced with a clip 26 while ach of the clips 26 can be replaced with a ledge 24.

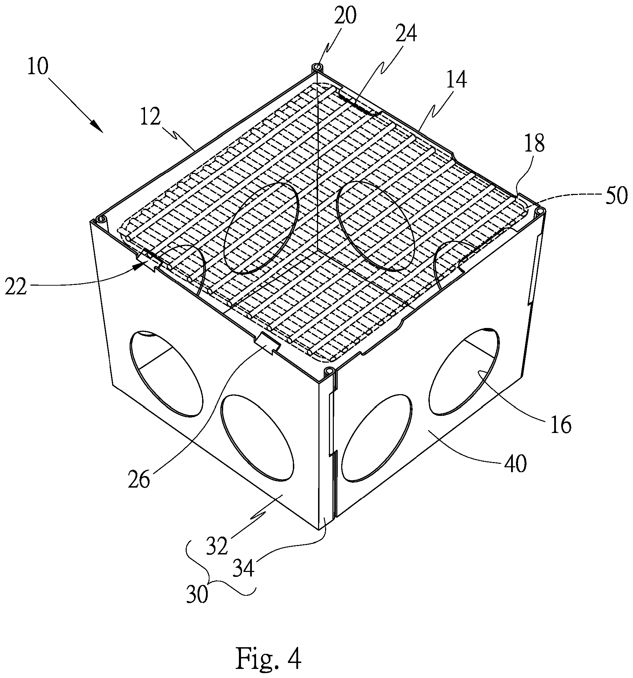

Referring to FIGS. 3 to 5, the collapsible stoking apparatus 10 is in an extended position. There is an angle 11 between the panels 12 and 14. The stoking apparatus 10 provides a square profile. Hence, the angles 11 and 36 are located at two ends of diagonal line. The angles 11 and 36 are identical to each other, about 90°±5°.

Now, the panel 14 is located opposite to the panel 30. The ledge 24 of the panel 14 is located opposite to the clips 26 of the panel 30. The ledge 24 of the panel 14, the clips 26 of the panel 30 and the ledge 24 of the panel 40 together support a grill 50 located in the collapsible stoking apparatus 10.

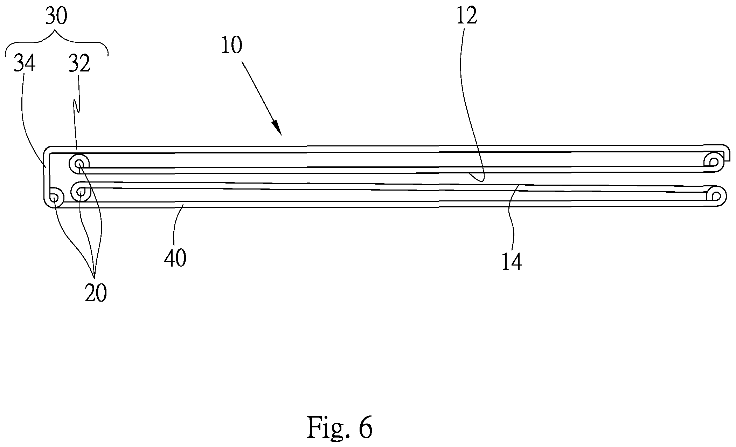

Referring to FIG. 6, the collapsible stoking apparatus 10 is in a collapsed position. The panel 40 is located close to the major portion 32 of the panel 30, and the panel 12 is located to the panel 14. The panels 12 and 14 are located between the panel 40 and the major portion 32 of the panel 30. The minor portion 34 of the panel 30 provides a gap between the major portion 32 of the panel 30 and the panel 40 to receive the panels 12 and 14, without interfering with the hinge 20 provided between the minor portion 34 of the panel 30 and the panel 40.

The present invention has been described via the detailed illustration of the preferred embodiment.

## Claims

1. A collapsible stoking apparatus comprising:
a first concealable panel (12);
a second concealable panel (14) comprising an edge pivotally connected to an edge of the first concealable panel (12);
a bent covering panel (30) comprising:
a major portion (32) made with an edge pivotally connected to another edge of the first concealable panel (12); and
a minor portion (34) extending from an opposite edge of the major portion (32), with an angle (36) between the major and minor portions (32, 34); and
a flat covering panel (40) made with an edge pivotally connected to an edge of the minor portion (34), and another edge pivotally connected to another edge of the second concealable panel (14);
wherein there is an angle (11) between the first and second concealable panels (12, 14) when the collapsible stoking apparatus is in an extended position, the angle (11) between the first and second concealable panels (12, 14) and the angle (36) between the major and minor portions (32, 34) are located at two ends of a diagonal line; and
wherein the minor portion (34) provides a gap between the major portion (32) and the flat covering panel (40) to receive the first and second concealable panels (12, 14) when the collapsible stoking apparatus (10) is in a collapsed position, wherein the major portion (32) is made with an area marginally larger than that of the concealable panels (12, 14) and
the flat covering panel (40) is made with an area substantially identical to that of the major portion (32), **characterized in that** when the collapsible stoking apparatus is in the extended position the angle (11) between the first and second concealable panels (12, 14) is substantially identical to the angle (36) between the major and minor portions (32, 34).

2. The collapsible stoking apparatus according to claim 1, further comprising a grill (50) supported on the panels (12, 14, 30, 40) when the stoking apparatus (10) is in the extended position.

3. The collapsible stoking apparatus according to claim 2, wherein at least one of the panels (12, 14, 30, 40) further comprises at least one sledge (24) for supporting a portion of the grill (50) while at least another one of the panels (12, 14, 30, 40) comprises at least one clip (26) for supporting another portion of the grill (50).

4. The collapsible stoking apparatus according to claim 1, wherein each of the first and second concealable panels (12, 14) is a trapezoidal plate, wherein the flat covering panel (40) is a trapezoidal plate, wherein the major portion panel (32) is a trapezoidal portion.

5. The collapsible stoking apparatus according to claim 1, wherein one of the panels (12, 14, 30, 40) comprises at least one aperture (16).

6. The collapsible stoking apparatus according to claim 1, wherein one of the panels (12, 14, 30,40) comprises at least one slot (18).

7. The collapsible stoking apparatus according to claim 1, wherein the major portion (32) comprises two loops (28) adapted for receiving two ends of a handle.

## Patentansprüche

1. Zusammenklappbare Heizvorrichtung, umfassend:
eine erste verdeckbare Platte (12),
eine zweite verdeckbare Platte (14), die einen Rand umfasst, der schwenkbar mit einem Rand der ersten verdeckbaren Platte (12) verbunden ist,
eine gebogene Abdeckplatte (30), umfassend:
einen Hauptteil (32), der mit einem Rand ausgebildet ist, der schwenkbar mit einem anderen Rand der ersten verdeckbaren Platte (12) verbunden ist, und
einen kleinen Teil (34), der sich von einem gegenüberliegenden Rand des Hauptteils (32), mit einem Winkel (36) zwischen den Haupt- und den kleinen Teilen (32, 34) erstreckt, und
eine flache Abdeckplatte (40), die mit einem Rand, der schwenkbar mit einem Rand des kleinen Teils (34) verbunden ist, und einem anderen Rand, der schwenkbar mit einem anderen Rand der zweiten verdeckbaren Platte (14) verbunden ist, ausgebildet ist,
wobei ein Winkel (11) zwischen den ersten und zweiten verdeckbaren Platten (12, 14) vorliegt, wenn die zusammenklappbare Heizvorrichtung in einer ausgefahrenen Position ist, wobei der Winkel (11) zwischen den ersten und zweiten verdeckbaren Platten (12, 14) und der Winkel (36) zwischen dem Hauptteil und kleinen Teil (32, 34) an zwei Enden einer diagonalen Linie angeordnet sind, und
wobei der kleine Teil (34) eine Lücke zwischen dem Hauptteil (32) und der flachen Abdeckplatte (40) bereitstellt, um die ersten und zweiten verdeckbaren Platten (12, 14) aufzunehmen, wenn die zusammenklappbare Heizvorrichtung (10) in einer zusammengeklappten Position ist,
wobei der Hauptteil (32) mit einer Fläche ausgebildet ist, die marginal größer ist als die der verdeckbaren Platten (12, 14) und
die flache Abdeckplatte (40) mit einer Fläche ausgebildet ist, die im Wesentlichen identisch zu der des Hauptteils (32) ist,
**dadurch gekennzeichnet, dass**,
wenn die zusammenklappbare Heizvorrichtung in der ausgefahrenen Position ist, der Winkel (11) zwischen den ersten und zweiten verdeckbaren Platten (12, 14) im Wesentlichen identisch zu dem Winkel (36) zwischen dem Hauptteil und kleinen Teilen (32, 34) ist.

2. Zusammenklappbare Heizvorrichtung gemäß Anspruch 1, ferner einen Grill (50) umfassend, der an den Platten (12, 14, 30, 40) gestützt wird, wenn die Heizvorrichtung (10) in der ausgefahrenen Position ist.

3. Zusammenklappbare Heizvorrichtung gemäß Anspruch 2, bei welcher zumindest eine der Platten (12, 14, 30, 40) ferner zumindest einen Schlitten (24) umfasst, um einen Abschnitt des Grills (50) zu stützen, während zumindest eine andere der Platten (12, 14, 30, 40) zumindest eine Klammer (26) umfasst, um einen anderen Abschnitt des Grills (50) zu stützen.

4. Zusammenklappbare Heizvorrichtung gemäß Anspruch 1, bei welcher jede der ersten und zweiten verdeckbaren Platten (12, 14) eine trapezförmige Platte ist, wobei die flache Abdeckplatte (40) eine trapezförmige Platte ist und wobei die Hauptteilplatte (32) ein trapezförmiger Teil ist.

5. Zusammenklappbare Heizvorrichtung gemäß Anspruch 1, bei welcher eine der Platten (12, 14, 30, 40) zumindest eine Öffnung (16) umfasst.

6. Zusammenklappbare Heizvorrichtung gemäß Anspruch 1, bei welcher eine der Platten (12, 14, 30, 40) zumindest einen Schlitz (18) umfasst.

7. Zusammenklappbare Heizvorrichtung gemäß Anspruch 1, bei welcher der Hauptteil (32) zwei Ringe (28) umfasst, die darauf ausgelegt sind, zwei Enden eines Griffs aufzunehmen.

## Revendications

1. Appareil de chauffe pliable comprenant:
un premier panneau encastrable (12);
un second panneau encastrable (14) comprenant une arête raccordée de manière pivotante à une arête du premier panneau encastrable (12);
un panneau de couverture plié (30) comprenant:
une portion majeure (32) réalisée avec une arête raccordée de manière pivotante à l'autre arête du premier panneau encastrable (12); et
une portion mineure (34) s'étendant depuis une arête opposée de la portion majeure (32), avec un angle (36) entre les portions majeures et mineures (32, 34); et
un panneau de couverture plat (40) réalisé avec une arête raccordée de manière pivotante à une arête de la portion mineure (34), et une autre arête raccordée de manière pivotante à une autre arête du second panneau encastrable (14);
dans lequel il y a un angle (11) entre les premier et second panneaux encastrables (12, 14) lorsque l'appareil de chauffe pliable est dans une position étendue, l'angle (11) entre les premier et second panneaux encastrables (12, 14) et l'angle (36) entre les portions majeures et mineures (32, 34) sont situés aux deux extrémités d'une ligne diagonale; et
dans lequel la portion mineure (34) fournit une fente entre la portion majeure (32) et le panneau de couverture plat (40) pour recevoir les premier et second panneaux encastrables (12, 14) lorsque l'appareil de chauffe pliable (10) est dans une position pliée,
dans lequel la portion majeure (32) est réalisée avec une zone légèrement plus grande que celle des panneaux encastrables (12, 14) et
le panneau de couverture plat (40) est réalisé avec une zone sensiblement identique à celle de la portion majeure (32),
**caractérisé en ce que** lorsque l'appareil de chauffe pliable est dans la position étendue l'angle (11) entre les premier et second panneaux encastrables (12, 14) est sensiblement identique à l'angle (36) entre les portions majeure et mineure (32, 34).

2. Appareil de chauffe pliable selon la revendication 1, comprenant en outre une grille (50) supportée sur les panneaux (12, 14, 30, 40) lorsque l'appareil de chauffe (10) est dans la position étendue.

3. Appareil de chauffe pliable selon la revendication 2, dans lequel au moins un des panneaux (12, 14, 30, 40) comprend en outre au moins une coulisse (24) pour le support d'une portion de la grille (50) alors qu'au moins un autre des panneaux (12, 14, 30, 40) comprend au moins un clip (26) pour le support de l'autre portion de la grille (50).

4. Appareil de chauffe pliable selon la revendication 1, dans lequel chacun des premier et second panneaux encastrables (12, 14) est une plaque trapézoïdale, dans lequel le panneau de couverture plat (40) est une plaque trapézoïdale, dans lequel le panneau de portion majeure (32) est une portion trapézoïdale.

5. Appareil de chauffe pliable selon la revendication 1, dans lequel un des panneaux (12, 14, 30, 40) comprend au moins une ouverture (16).

6. Appareil de chauffe pliable selon la revendication 1, dans lequel un des panneaux (12, 14, 30, 40) comprend au moins une fente (18).

7. Appareil de chauffe pliable selon la revendication 1, dans lequel la portion majeure (32) comprend deux boucles (28) adaptées pour recevoir deux extrémités d'un manche.
